# EUROPEAN PATENT APPLICATION

(11) **EP 4 835 946 A1**
(43) Date of publication of application: **04.11.2026**
(21) Application number: 24913444.6
(22) Date of filing: 27.12.2024
(51) Int. Cl.: H01H 85/165, B60R 16/023, H01H 85/20, H01H 85/22

(54) **ENCLOSURE**

(30) Priority: 28.12.2023 KR 20230195794
(71) Applicant: Yura Corporation Co., Ltd., Seongnam-si, Gyeonggi-do 13494 (KR)
(72) Inventor: SEO, Mun Sik, Uiwang-si, Gyeonggi-do 16084 (KR)
(74) Representative: ABG Intellectual Property Law, S.L.
(86) International application number: PCT/KR2024/021217
(87) International publication number: WO 2025/143837

(57) **Abstract**

An enclosure according to an embodiment of the present disclosure includes a housing including a body and a cover coupled to each other to define a closed receiving space; a fuse box installed in the receiving space; and an intermediate holder simultaneously engaged with the fuse box and the housing to fix the fuse box, wherein the intermediate holder includes a first fastening portion engaged with the fuse box in a first direction and a second fastening portion engaged with the housing in a second direction, and fixes the fuse box within the receiving space in the second direction, thereby optimizing an assembly process and providing improved waterproof and vibration-resistant performance.

## Description

### FIELD OF THE INVENTION

The present disclosure relates to an enclosure, and more particularly, to an enclosure that accommodates therein a fuse box in which a plurality of electrical components are installed.

### BACKGROUND ART

A fuse box is provided inside a vehicle in order to stably distribute and supply power to a plurality of components performing various functions. For this purpose, a plurality of electrical components for supplying and interrupting power are installed on the inside and the outside of the fuse box.

In this configuration, since a plurality of electrical components are also installed on the outside of the fuse box, an enclosure further including an external housing that accommodates the fuse box is generally used in order to protect the electrical components and allow the fuse box to be stably installed at an optimal position inside the vehicle.

In addition, a blocker that provides a locking structure in a state in which the fuse box is seated in the housing so that the fuse box is stably fixed therein is installed in the external housing, and the blocker slides from an unfastened position to a fully fastened position and provides a fixing force.

Accordingly, an operator has to check whether the blocker is fully fastened, thereby increasing the fatigue of the operator, and a problem arises in that vibration-proof performance is degraded due to incomplete fastening.

In addition, as waterproofness is degraded at a connection portion between a grommet, which is formed so that a wire connected to the fuse box can be connected to an external component, and the external housing, a problem arises in that electrical connection stability is ultimately degraded.

### SUMMARY OF THE INVENTION

### [PROBLEM]

An embodiment of the present disclosure has been devised to solve the above-described problems, and an object thereof is to provide an enclosure that optimizes an assembly process and provides improved waterproof and vibration-proof performance.

### [SOLUTION]

An enclosure according to an embodiment of the present disclosure includes a housing including a body and a cover coupled to each other to define a closed receiving space; a fuse box installed in the receiving space; and an intermediate holder simultaneously engaged with the fuse box and the housing to fix the fuse box, wherein the intermediate holder includes a first fastening portion engaged with the fuse box in a first direction and a second fastening portion engaged with the housing in a second direction, and fixes the fuse box within the receiving space in the second direction.

The fuse box may have an installation surface on which an electrical component is installed in the first direction and which is arranged in the second direction, and an assembly surface arranged in the first direction along a perimeter of the installation surface, the assembly surface having a first coupling portion formed on the assembly surface in the first direction; the housing may have a second coupling portion extending in the second direction from an inner surface of one of the body and the cover; and the intermediate holder may have, on an inner side of the intermediate holder, the first fastening portion extending in the first direction and engaged with the first coupling portion, and may have, on an outer side of the intermediate holder, the second fastening portion extending in the second direction and engaged with the second coupling portion, and may be engaged with the housing in the second direction while being engaged with the fuse box in the first direction.

The intermediate holder may include a first intermediate portion arranged in the first direction and having the first fastening portion on an inner side of the first intermediate portion, and a second intermediate portion extending from the first intermediate portion in a third direction and having the second fastening portion on an outer side of the second intermediate portion, such that the intermediate holder may be engaged with the fuse box and the housing at different positions and in different directions.

The first coupling portion and the first fastening portion may have complementary structures that, when engaged with each other, define a first guide-fixing portion configured to guide coupling in the first direction while providing a fixing force in the third direction, and a first elastic fixing portion configured to elastically deform in the third direction while providing a fixing force in the first direction; and the second coupling portion and the second fastening portion may have complementary structures that, when engaged with each other, define a second elastic fixing portion configured to elastically deform in the first direction while providing a fixing force in the second direction, and a second guide portion configured to receive opposite sides of the second elastic fixing portion.

The intermediate holder may be provided as a plurality of intermediate holders that engage the fuse box with the housing at positions on both sides in the third direction.

The enclosure may further include a grommet installed through one side of the body; and a moisture ingress prevention seal disposed between the body and the cover and between the grommet and the cover to prevent moisture from entering the receiving space.

The moisture ingress prevention seal may include a seal body received in an installation groove formed along a perimeter of the cover, and a sealing lip portion protruding from the seal body in the second direction and configured to be in close contact with the body and the grommet while lengthening a moisture ingress path.

The moisture ingress prevention seal may further include a close-contact protrusion additionally protruding from the sealing lip portion at a position corresponding to a boundary between the body and the grommet.

### [EFFECT]

As described above, according to the solution of the present disclosure, various effects including the following can be expected. However, the present disclosure need not achieve all of the following effects.

The enclosure of the present disclosure includes an intermediate holder that is coupled to the housing while being installed on the fuse box and provides a fixing force, thereby eliminating the need for an operator to separately check whether the fuse box is fixed and significantly reducing fatigue of the operator.

In addition, since the intermediate holder is engaged with the fuse box in the first direction and engaged with the housing in the second direction, a reaction force generated when the intermediate holder is coupled to the housing does not affect the fixing force between the fuse box and the intermediate holder, thereby further optimizing an assembly process.

In addition, the intermediate holder allows the fuse box, on which the electrical component is installed in the first direction, to be installed in the housing in the second direction, thereby improving utilization of an interior space of a vehicle and design freedom.

In addition, the moisture ingress prevention seal extends to a portion at which the cover and the grommet contact each other, and a close-contact protrusion is formed to closely contact a boundary between the body and the grommet, thereby improving waterproof performance of the receiving space in which the fuse box is received and securing electrical stability.

### BRIEF DESCRIPTION OF THE DRAWINGS

FIG. 1 is a perspective view of an enclosure according to an embodiment of the present disclosure.
FIG. 2 is a perspective view showing a state in which the cover of FIG. 1 is open.
FIG. 3 is an exploded perspective view of FIG. 1.
FIG. 4(a) is an enlarged perspective view of a first coupling portion of portion A of FIG. 3, and FIG. 4(b) is an enlarged perspective view of a second coupling portion of portion B of FIG. 3.
FIG. 5(a) is a perspective view of the intermediate holder of FIG. 3, and FIG. 5(b) is a perspective view of FIG. 5(a) viewed from another direction.
FIG. 6 is a perspective view, viewed from another direction, showing a state in which the intermediate holder is engaged with the fuse box of FIG. 3.
FIG. 7(a) is a cross-sectional perspective view taken along line VIIa-VIIa of portion C of FIG. 1, FIG. 7(b) is a cross-sectional perspective view taken along line VIIb-VIIb, and FIG. 7(c) is a cross-sectional perspective view taken along line VIIc-VIIc.
FIG. 8(a) is a cross-sectional perspective view taken along line VIIIa-VIIIa of portion C of FIG. 1, and FIG. 8(b) is a cross-sectional perspective view taken along line VIIIb-VIIIb.
FIG. 9(a) is a cross-sectional perspective view taken along line IXa-IXa of portion C of FIG. 1, and FIG. 9(b) is a cross-sectional perspective view taken along line IXb-IXb.

### DETAILED DESCRIPTION OF THE PREFERRED EMBODIMENTS

Hereinafter, specific embodiments of the present disclosure will be described in detail with reference to the drawings. However, descriptions of known functions or configurations will be omitted so as not to obscure the gist of the present disclosure.

For convenience of description, based on a state in which the housing, the fuse box, and the intermediate holder are all installed, a direction in which the intermediate holder and the fuse box are coupled is defined as a first direction, a direction in which the intermediate holder and the housing are coupled is defined as a second direction, and a direction perpendicular to both the first direction and the second direction is defined as a third direction.

In addition, a direction toward the cover is referred to as an upper side in the second direction, and a direction toward the body is referred to as a lower side in the second direction. However, this is for convenience of description and may vary depending on an actual installation environment of the enclosure.

In addition, the first guide-fixing portion and the first elastic fixing portion are collective terms for structures formed on each of the first coupling portion and the first fastening portion and complementarily engaged with each other; and, for ease of reference to the drawings, only component names constituting the first guide-fixing portion and the first elastic fixing portion will be identified.

Similarly, the second elastic fixing portion and the second guide portion are collective terms for structures formed on each of the second coupling portion and the second fastening portion and complementarily engaged with each other or configured such that one structure receives another; and, for ease of reference to the drawings, only component names constituting the second elastic fixing portion and the second guide portion will be identified.

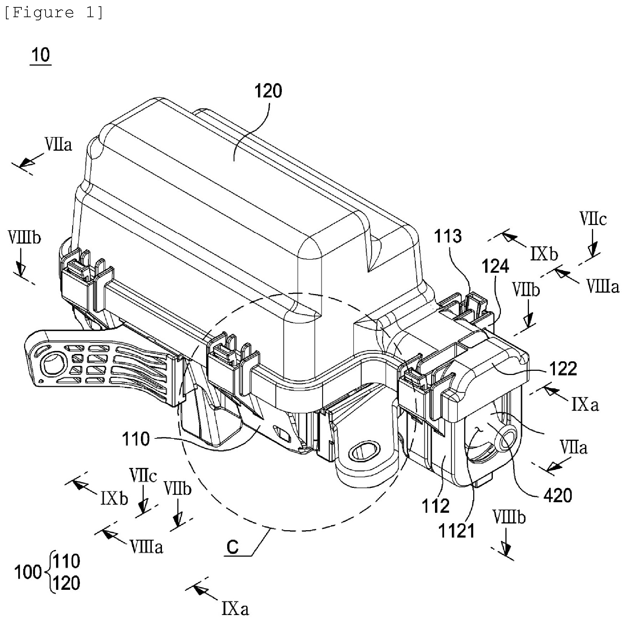

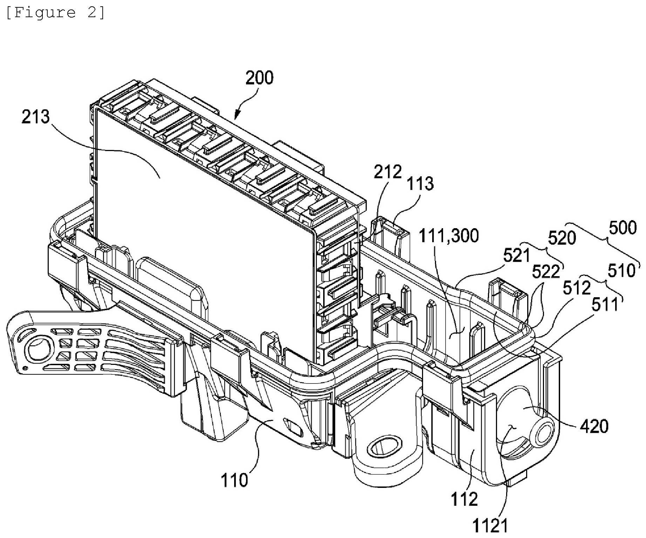

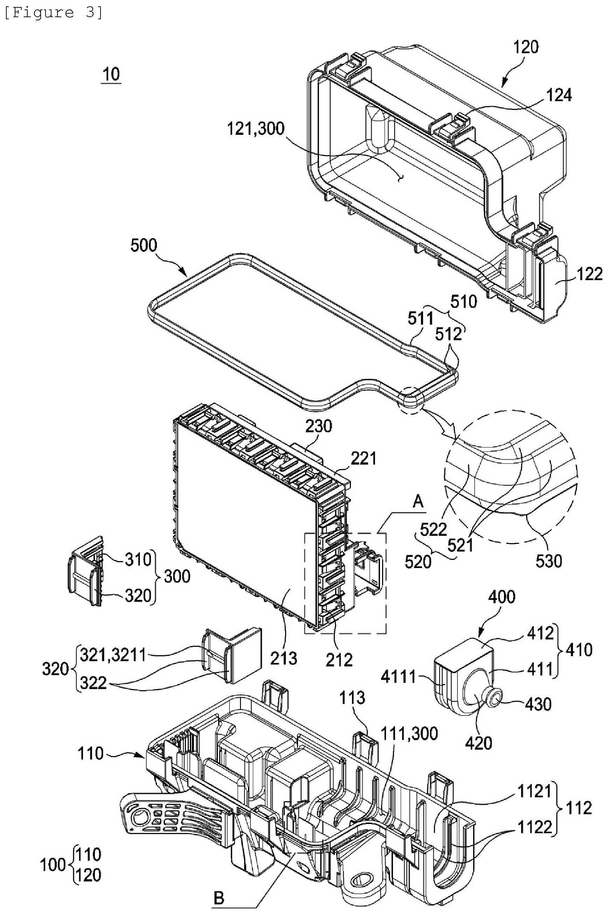

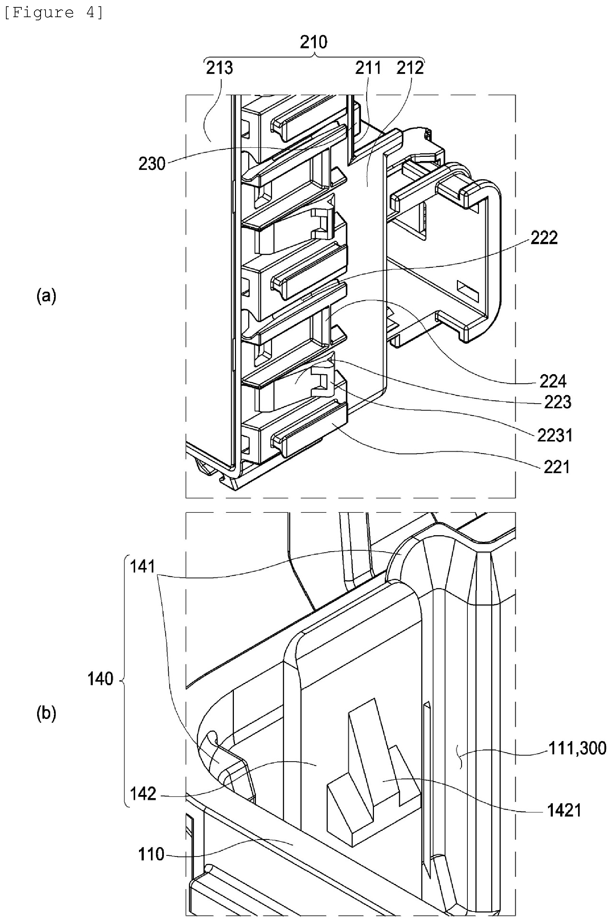

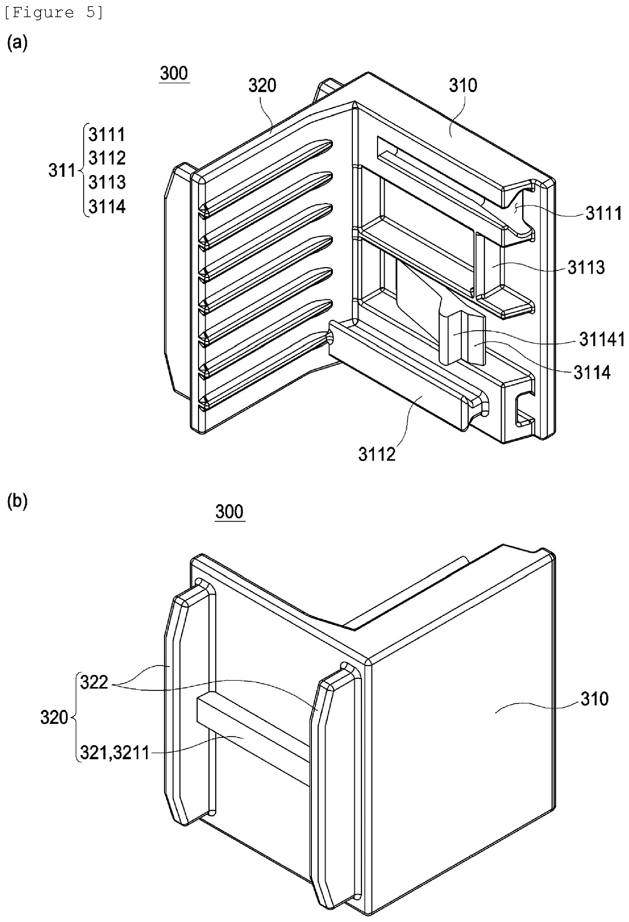

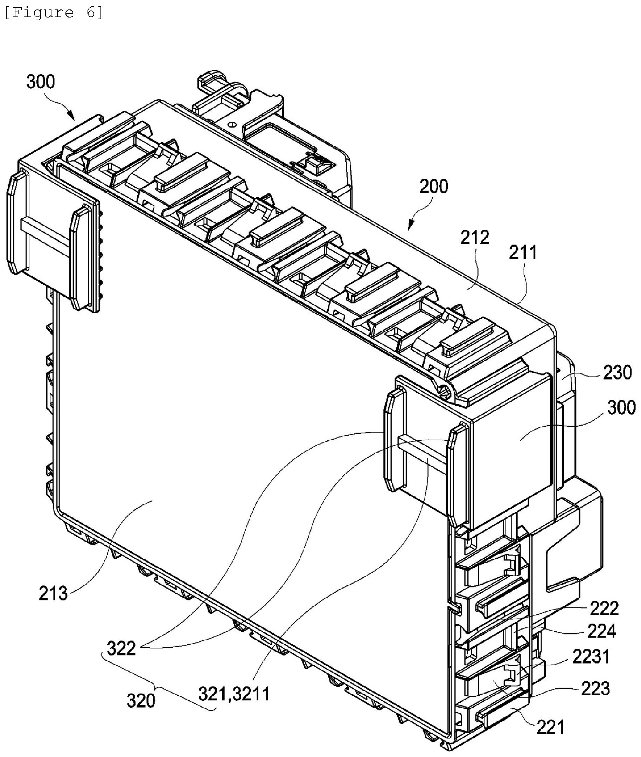

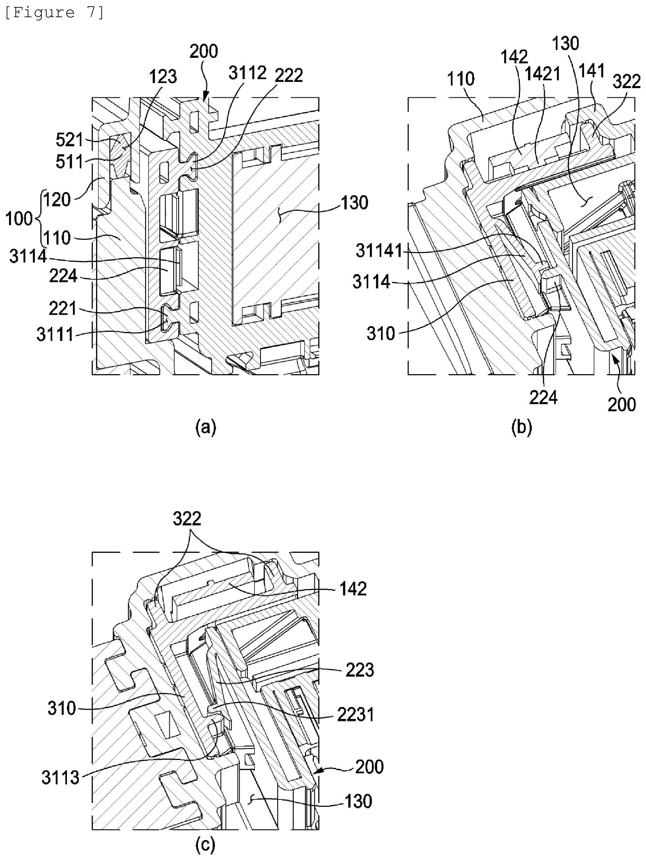

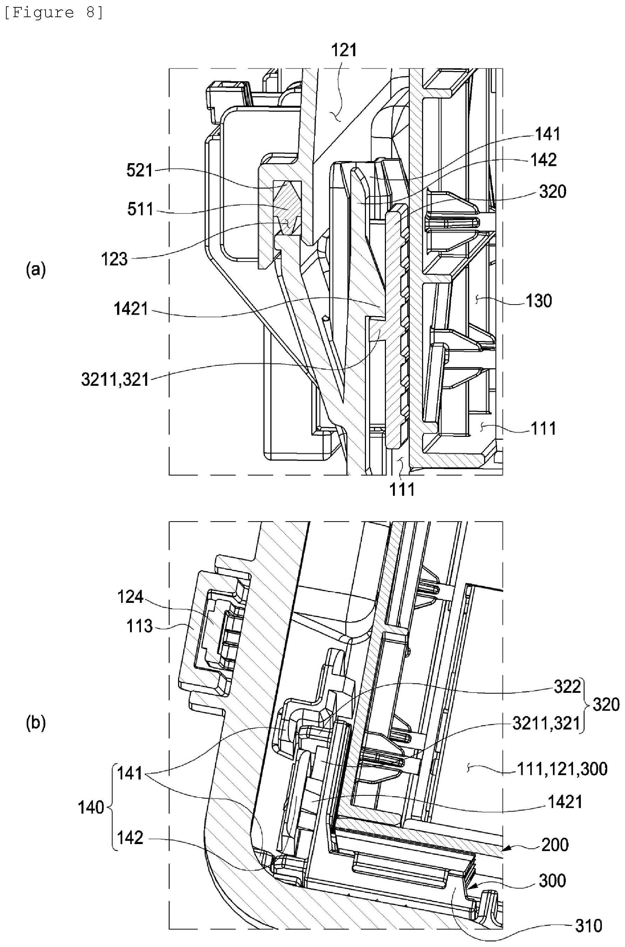

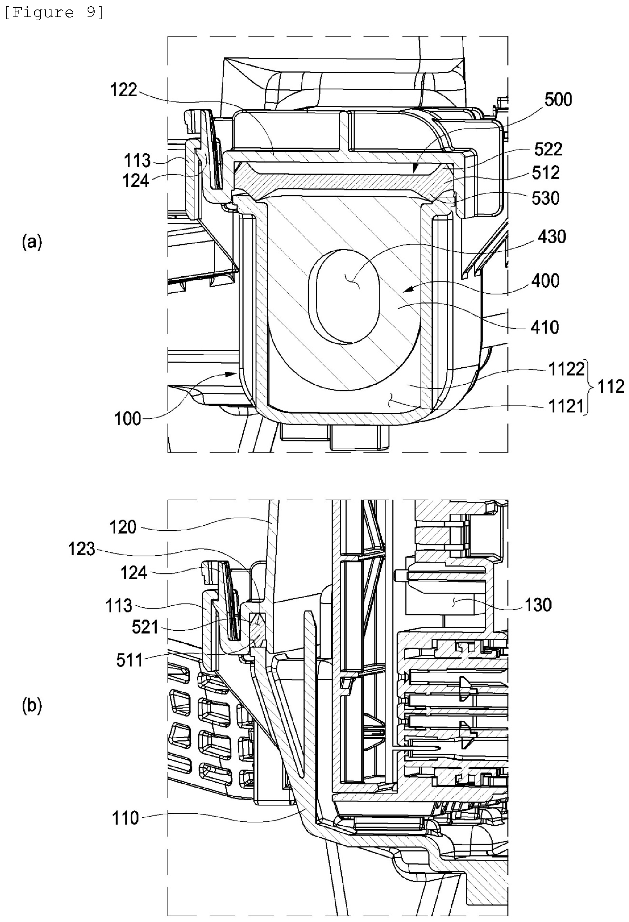

FIG. 1 is a perspective view of an enclosure according to an embodiment of the present disclosure; FIG. 2 is a perspective view showing a state in which the cover of FIG. 1 is open; FIG. 3 is an exploded perspective view of FIG. 1; FIG. 4(a) is an enlarged perspective view of a first coupling portion of portion A of FIG. 3; FIG. 4(b) is an enlarged perspective view of a second coupling portion of portion B of FIG. 3; FIG. 5(a) is a perspective view of the intermediate holder of FIG. 3; FIG. 5(b) is a perspective view of FIG. 5(a) viewed from another direction; FIG. 6 is a perspective view, viewed from another direction, showing a state in which the intermediate holder is engaged with the fuse box of FIG. 3; FIG. 7(a) is a cross-sectional perspective view taken along line VIIa-VIIa of portion C of FIG. 1; FIG. 7(b) is a cross-sectional perspective view taken along line VIIb-VIIb; FIG. 7(c) is a cross-sectional perspective view taken along line VIIc-VIIc; FIG. 8(a) is a cross-sectional perspective view taken along line VIIIa-VIIIa of portion C of FIG. 1; FIG. 8(b) is a cross-sectional perspective view taken along line VIIIb-VIIIb; FIG. 9(a) is a cross-sectional perspective view taken along line IXa-IXa of portion C of FIG. 1; and FIG. 9(b) is a cross-sectional perspective view taken along line IXb-IXb.

Referring to FIGS. 1 to 9, an enclosure (10) includes a housing (100) including a body (110) and a cover (120) coupled to each other to define a closed receiving space (130), a fuse box (200) installed in the receiving space (130), and an intermediate holder (300) simultaneously engaged with the fuse box (200) and the housing (100) to fix the fuse box (200), wherein the intermediate holder (300) includes a first fastening portion (311) engaged with the fuse box (200) in a first direction and a second fastening portion (321) engaged with the housing (100) in a second direction, and fixes the fuse box (200) within the receiving space (130) in the second direction.

In this configuration, the enclosure may further include a grommet (400) installed through one side of the body (110), and a moisture ingress prevention seal (500) disposed between the body (110) and the cover (120) and between the grommet (400) and the cover (120) to prevent moisture from entering the receiving space (130).

The enclosure (10) includes a housing (100) that receives the fuse box (200) therein, and protects the electrical component (230), which is installed on an outer side of the fuse box (200), from the outside while allowing the fuse box (200) to be easily installed at an optimized position inside a vehicle.

The housing (100) includes a body (110) and a cover (120) coupled to each other; a receiving space (130) closed from the outside is defined inside the housing (100) by coupling the body (110) and the cover (120); and one of the body (110) and the cover (120) has a second coupling portion (140) with which the intermediate holder (300) is engaged.

Specifically, the body (110) and the cover (120) are coupled in the second direction, and the body (110) defines therein a first internal space (111) forming a lower side of the receiving space (130) in the second direction, has, at one side of the body (110), a seating portion (112) on which the grommet (400) is seated, and has, on an outer side of the body (110), a first locking portion (113) coupled to the cover (120).

In this configuration, the seating portion (112) is open upward in the second direction so that the grommet (400) is assembled to the seating portion (112) in the second direction, defines a seating space (1121) in which a seating body (411) is received, and has an engagement rib (1122) formed along an inner circumferential surface of the seating space (1121).

The engagement rib (1122) is engaged in a receiving groove (4111) formed in the seating body (411) of the grommet (400), and provides an engagement fixing force in the third direction while the grommet (400) is seated in the seating portion (112).

In addition, the first locking portion (113) is formed on an outer side of the body (110), and is configured to receive, inwardly, a second locking portion (124) formed on an outer side of the cover (120), while allowing the second locking portion (124) to be engaged and fixed in the second direction.

The cover (120) defines therein a second internal space (121) forming an upper side of the receiving space (130) in the second direction, has, at one side of the cover (120), a seating cover (122) configured to entirely cover an upper side of the seating body (411), and has an installation groove (123) recessed along a surface contacting the body (110) and in which the moisture ingress prevention seal (500) is installed.

In this configuration, the installation groove (123) is formed as one continuous groove extending along perimeters of the cover (120) and the seating cover (122), and accordingly the moisture ingress prevention seal (500) contacts all components formed between the receiving space (130) and the outside, that is, the body (110), the cover (120), and the grommet (400), thereby improving waterproof performance of the receiving space (130).

In addition, the cover (120) further includes, at an outer side, a second locking portion (124), which is received in the first locking portion (113) as the body (110) and the cover (120) are coupled, elastically deforms, and is engaged with and fixed to the first locking portion (113) in the second direction by a restoring force.

In this configuration, the first and second locking portions (113, 124) are described as one exemplary embodiment, and may have various structures that provide a fixing force in the second direction; and the above-described structures may be formed on the body (110) and the cover (120) with the positions of the structures reversed or interchanged.

Preferably, a plurality of first locking portions (113) and a plurality of second locking portions (124) are provided at positions around a perimeter of the housing (100) to provide a stable fixing force in the second direction.

The second coupling portion (140) is formed on one of the body (110) and the cover (120), and the intermediate holder (300) installed on the fuse box (200) is engaged with the second coupling portion (140) in the second direction, thereby stably fixing the fuse box (200) in the receiving space (130).

However, for convenience of description, an example in which the second coupling portion (140) is formed on an inner surface of the body (110) will be described below.

In addition, the second elastic-deformation receiving portion (141) and the second elastic-deformation rib (142), which form the second coupling portion (140), are configured to be complementarily engaged with the second engagement protrusion (3211) and the guide ribs (322), which form the second fastening portion (321); the second elastic-deformation rib (142), together with the second engagement protrusion (3211), defines a second elastic fixing portion, and the second elastic-deformation receiving portion (141), together with the guide ribs (322), defines a second guide portion.

Therefore, the structure of the second coupling portion (140) will now be described in detail, and a manner in which the second coupling portion (140) is engaged will be described below together with the second fastening portion (321).

The second elastic-deformation receiving portion (141) projects from the inner surface of the body (110) toward the first internal space (111), receives the second elastic-deformation rib (142) and the second fastening portion (321) therein to provide a deformation space for the second elastic-deformation rib (142), and is formed parallel to the guide ribs (322) to guide coupling of the intermediate holder (300) in the second direction.

In addition, the second elastic-deformation rib (142) extends in the second direction from an inner side of the second elastic-deformation receiving portion (141), elastically deforms in the first direction as the intermediate holder (300) is coupled, is engaged with and fixed to the second engagement protrusion (3211) by a restoring force, and provides a fixing force in the second direction.

To this end, a second support protrusion (1421) is formed on one side of the second elastic-deformation rib (142), the second support protrusion (1421) protruding to contact the second engagement protrusion (3211) and guide the second elastic-deformation rib (142) to elastically deform in the first direction, while being engaged with and fixed to an upper side of the second engagement protrusion (3211) in the second direction.

Accordingly, the enclosure (10) of the present disclosure includes the second coupling portion (140), with which the intermediate holder (300) engaged with the fuse box (200) is additionally engaged inside the housing (100), thereby providing a fixing force for stably fixing the fuse box (200) when the fuse box (200) is assembled into the housing (100).

Accordingly, the need for an operator to separately confirm complete engagement is eliminated, thereby optimizing an assembly process. In addition, by securing a fixing force through an elastic restoring force, the fuse box (200) can be relatively easily separated from the housing (100) as needed, thereby improving ease of maintenance.

The fuse box (200) includes a box body (210) on which a plurality of electrical components (230) are installed, and a first coupling portion (220) formed on an outer side of the box body (210) and to which the intermediate holder (300) is coupled. In this configuration, the box body (210) includes an installation surface (211) on which the electrical components (230) are installed in the first direction from an outer side, an assembly surface (212) formed along a perimeter of the installation surface (211), and a support surface (213) formed opposite to the installation surface (211).

Specifically, the installation surface (211) and the support surface (213) are arranged parallel to the second direction in a state in which the fuse box (200) is fixed to the housing (100), and the assembly surface (212) is arranged parallel to the first direction along an outer circumferential surface between the installation surface (211) and the support surface (213).

Accordingly, the box body (210) not only accommodates a plurality of electrical components (230) in a space between the installation surface (211) and the support surface (213), but also allows a plurality of electrical components (230) to be installed on an outer side of the installation surface (211). In this configuration, the electrical components (230) are installed on the installation surface (211) in the first direction.

The assembly surface (212) is arranged parallel to the first direction, and the first coupling portion (220) is formed on an outer side of the assembly surface (212) in the first direction so that the intermediate holder (300) is inserted and engaged in the first direction.

In addition, a first-1 guide-fixing protrusion (221), a first-2 guide-fixing groove (222), a first-1 elastic-deformation rib (223), and a first-2 engagement protrusion (224), which form the first coupling portion (220), are configured to be complementarily engaged with a first-1 guide-fixing groove (3111), a first-2 guide-fixing protrusion (3112), a first-1 engagement protrusion (3113), and a first-2 elastic-deformation rib (3114), which form the first fastening portion (311), respectively.

Accordingly, the first-1 guide-fixing protrusion (221) and the first-1 guide-fixing groove (3111), together with the first-2 guide-fixing groove (222) and the first-2 guide-fixing protrusion (3112), define the first guide-fixing portion, and the first-1 elastic-deformation rib (223) and the first-2 engagement protrusion (224), together with the first-1 engagement protrusion (3113) and the first-2 elastic-deformation rib (3114), define the first elastic fixing portion.

Therefore, the structure of the first coupling portion (220) will now be described in detail, and a manner in which the first coupling portion (220) is engaged will be described below together with the first fastening portion (311).

The first-1 guide-fixing protrusion (221) extends in the first direction, is inserted into the first-1 guide-fixing groove (3111) formed in the first fastening portion (311) to guide a coupling direction of the intermediate holder (300), and is formed to have a cross-sectional shape that widens from an inner side toward an outer side, thereby providing a fixing force in the third direction when the first-1 guide-fixing protrusion (221) is seated in the first-1 guide-fixing groove (3111).

In addition, the first-1 guide-fixing groove (3111) extends in the first direction, receives the first-1 guide-fixing protrusion (221) formed on the first coupling portion (220) to guide the coupling direction of the intermediate holder (300), and is formed to have a cross-sectional shape that widens from an outer side toward an inner side, thereby providing a fixing force in the third direction when the first-1 guide-fixing protrusion (221) is received in the first-1 guide-fixing groove (3111).

In summary, the first-1 guide-fixing protrusion (221) and the first-2 guide-fixing protrusion (3112) have the same shape and differ only in positions at which they are formed, and the first-1 guide-fixing groove (3111) and the first-2 guide-fixing groove (222) also have the same shape and differ only in positions at which they are formed.

The first-1 elastic-deformation rib (223) extends in the first direction, elastically deforms in the third direction as the intermediate holder (300) is coupled, and engages with and fixes the first-1 engagement protrusion (3113) by a restoring force, thereby providing a fixing force in the first direction.

To this end, the first-1 elastic-deformation rib (223) has a first-1 support protrusion (2231) protruding from one side of the first-1 elastic-deformation rib (223), the first-1 support protrusion (2231) contacting the first-1 engagement protrusion (3113), guiding elastic deformation of the first-1 elastic-deformation rib (223), and being engaged with and fixed to the first-1 engagement protrusion (3113) to provide a fixing force in the first direction.

In addition, the first-2 engagement protrusion (224) protrudes in the third direction, contacts the first-2 elastic-deformation rib (3114) as the intermediate holder (300) is coupled, guides elastic deformation of the first-2 elastic-deformation rib (3114) in the third direction, and is engaged with and fixed to a first-2 support protrusion (31141) formed on the first-2 elastic-deformation rib (3114), thereby providing a fixing force in the first direction.

Accordingly, in the enclosure (10) of the present disclosure, the first coupling portion (220), to which the intermediate holder (300) is engaged in the first direction, is directly formed on an outer side of the fuse box (200), so that the intermediate holder (300) can be assembled in a pre-coupled state when the fuse box (200) is coupled to the housing (100), thereby improving assembly workability for an operator.

In addition, when the first fastening portion (311) is formed to correspond to the first coupling portion (220) that has been provided in a conventional coupling structure between fuse boxes or in a conventional coupling structure between a fuse box and an external housing, a direction in which the fuse box (200) is assembled to the housing (100) can be changed through the intermediate holder (300) without a separate design change.

Accordingly, since this structure can be applied as is to various fuse boxes (200) through the intermediate holder (300), applicability of the present disclosure is very high, and product development costs for the enclosure (10), in which the fuse box (200) is coupled in the second direction, can also be reduced.

The intermediate holder (300) includes a first intermediate portion (310) engaged with the fuse box (200) in the first direction and a second intermediate portion (320) engaged with the body (110) in the second direction, and serves as an intermediary so that the fuse box (200) is installed in the housing (100) in a state in which the installation surface (211), on which the electrical components (230) are installed, is arranged parallel to the second direction.

In this configuration, it is preferable that the first intermediate portion (310) be arranged in the first direction, and that the second intermediate portion (320) extend from the first intermediate portion (310) in the third direction and be disposed on an outer side of the support surface (213), thereby restricting relative movement in the first direction when the first fastening portion (311) and the first coupling portion (220) are coupled.

In addition, when the second fastening portion (321) and the second coupling portion (140) are coupled in the second direction, a load in the second direction can be prevented from being directly applied to an interface at which the first fastening portion (311) and the first coupling portion (220) are coupled, thereby securing durability of the fuse box (200) and the intermediate holder (300).

Specifically, the first fastening portion (311) has, on an inner surface of the first intermediate portion (310), a first-1 guide-fixing groove (3111) and a first-2 guide-fixing protrusion (3112), each extending in the first direction; as the fuse box (200) and the intermediate holder (300) are coupled, the first-1 guide-fixing protrusion (221) is inserted into and seated in the first-1 guide-fixing groove (3111), and the first-2 guide-fixing protrusion (3112) is inserted into and seated in the first-2 guide-fixing groove (222).

Accordingly, as the fuse box (200) and the intermediate holder (300) are guided and inserted relative to each other in the first direction, a fixing force is provided in the third direction by the gradually widened shapes of the first-2 guide-fixing protrusion (3112) and the first-1 guide-fixing protrusion (221).

In addition, the first fastening portion (311) further includes a first-1 engagement protrusion (3113) protruding in the third direction and a first-2 elastic-deformation rib (3114) configured to elastically deform in the third direction; as the fuse box (200) and the intermediate holder (300) are coupled, the first-1 engagement protrusion (3113) contacts the first-1 elastic-deformation rib (223) and guides elastic deformation of the first-1 elastic-deformation rib (223) in the third direction, and the first-2 elastic-deformation rib (3114) is elastically deformed in the third direction by the first-2 engagement protrusion (224).

In this state, by restoring forces resulting from elastic deformation of the first-2 elastic-deformation rib (3114) and the first-1 elastic-deformation rib (223), the first-2 support protrusion (31141) and the first-2 engagement protrusion (224) are engaged with and fixed to each other in the first direction, and the first-1 engagement protrusion (3113) and the first-1 support protrusion (2231) are engaged with and fixed to each other in the first direction.

In summary, the first fastening portion (311) and the first coupling portion (220), when engaged with each other, define the first guide-fixing portion and the first elastic fixing portion, thereby providing fixing forces in the first direction and the third direction and allowing the fuse box (200) and the intermediate holder (300) to be more firmly fixed to each other.

The second fastening portion (321) includes a second engagement protrusion (3211) protruding in the first direction from an outer surface of the second intermediate portion (320), and, as the housing (100) and the intermediate holder (300) are coupled, the second engagement protrusion (3211) elastically deforms the second elastic-deformation rib (142) in the first direction.

In addition, the second fastening portion (321) further includes guide ribs (322) extending in the second direction and disposed on both sides of the second elastic-deformation rib (142) , thereby guiding coupling between the second fastening portion (321) and the second coupling portion (140) while restricting positional displacement in the first direction and the third direction. In this configuration, the second engagement protrusion (3211) is formed such that opposite sides of the second engagement protrusion (3211) are connected to the guide ribs (322) arranged opposite each other, thereby more stably fixing the second support protrusion (1421).

More specifically, the guide ribs (322) are each formed to be inserted into respective spaces defined between second-direction ribs constituting the second elastic-deformation receiving portion (141) and opposite sides of the second elastic-deformation rib (142), thereby doubly preventing movement of the intermediate holder (300) in the third direction in a state in which the second fastening portion (321) and the second coupling portion (140) are engaged.

Accordingly, the enclosure (10) of the present disclosure includes the intermediate holder (300) engaged with both the fuse box (200) and the housing (100), such that the fuse box (200) has fixing forces in all of the first, second, and third directions within the receiving space (130), thereby improving vibration resistance of the product.

In this configuration, by configuring the intermediate holder (300) such that a direction in which the intermediate holder (300) is coupled to the fuse box (200) and a direction in which the intermediate holder (300) is coupled to the housing (100) are different from each other, the fuse box (200) can be fixed in the second direction within the housing (100) without a design change to the fuse box (200).

In addition, the influence, on the coupling force between the intermediate holder (300) and the fuse box (200), of a reaction force resulting from the coupling force between the housing (100) and the intermediate holder (300) is minimized, thereby reducing fatigue of an operator and securing durability.

The grommet (400) includes a grommet body (410) including a seating body (411) seated in the seating portion (112) and a close-contact body (412) disposed at an opening of the seating portion (112), an extension grommet (420) extending from the grommet body (410) and configured to allow wiring and the like to be connected to an external component, and a communication space (430) formed inside the grommet body (410) and the extension grommet (420).

In this configuration, it is preferable that a receiving groove (4111), in which the engagement rib (1122) formed on the seating portion (112) is received, be further formed on an outer side of the seating body (411), so as to provide a fixing force in the first direction or the third direction in a state in which the grommet (400) is seated in the seating portion (112).

In addition, it is preferable that the close-contact body (412), which is disposed at the opening and contacts the moisture ingress prevention seal (500), be formed to be flat and be uniformly in close contact, over an entire contact area, with the second sealing lip (522) extending from the second body (512), thereby effectively preventing moisture from entering through a contact portion between the cover (120) and the grommet (400).

The moisture ingress prevention seal (500) includes a seal body (510) formed along a perimeter of the cover (120), and a sealing lip portion (520) protruding from the seal body (510) in the second direction and in close contact with the body (110) and the grommet (400), thereby preventing moisture from entering the receiving space (130).

Specifically, the seal body (510) includes a first body (511) formed at a portion at which the cover (120) and the body (110) contact each other, and a second body (512) formed at a portion at which the cover (120) and the grommet (400) contact each other. In this configuration, opposite sides of the second body (512) are connected to the first body (511) and integrally formed with the first body (511).

However, the second body (512) is formed to have a larger area than the first body (511), thereby more effectively preventing moisture from entering along a surface at which the cover (120) and the close-contact body (412) contact each other.

To this end, the sealing lip portion (520) includes a first sealing lip (521) protruding from both sides of the first body (511) in the second direction, and a second sealing lip (522) protruding from both sides of the second body (512) in the second direction and continuously extending along the second body (512).

In addition, it is preferable that the seal body (510) further include a close-contact protrusion (530) additionally protruding from the second sealing lip (522) at a position corresponding to a boundary at which the body (110) and the grommet (400) contact each other.

Accordingly, when the cover (120) is coupled to the body (110) in a state in which the grommet (400) is seated in the seating portion (112) of the body (110), the close-contact protrusion (530) is deformed and brought into close contact with a gap formed due to tolerances that may occur during manufacture of the body (110) and the grommet (400) and due to rounded portions inevitably generated during manufacture.

Therefore, the moisture ingress prevention seal (500) of the enclosure (10) of the present disclosure is provided at contact portions between components that define a boundary between the receiving space (130) and the outside, and employs a structure including the second sealing lip (522) and the close-contact protrusion (530) that seals a gap inevitably generated or generated due to manufacturing tolerances at a boundary between the grommet (400), which is formed of a material different from that of the body (110), and the body (110).

Accordingly, waterproof performance of the receiving space (130), in which the fuse box (200) including a plurality of components involved in supplying and interrupting power is received, is improved, thereby improving product reliability and further securing electrical connection stability to provide improved vehicle safety.

In summary, the enclosure (10) of the present disclosure includes the intermediate holder (300), which is engaged with the second coupling portion (140) formed in the receiving space (130) while being installed on the fuse box (200), thereby securing complete fastening of the fuse box (200) and reducing fatigue of an operator.

In this configuration, the intermediate holder (300) is engaged with the fuse box (200) in the first direction and is engaged with the housing (100) in the second direction, so that an assembly reaction force generated when the housing (100) is assembled does not affect the coupling force between the fuse box (200) and the intermediate holder (300) at all, thereby providing a more stable fixing force.

In addition, by providing a fixing force through an elastic force, the fuse box (200) can be more easily separated as needed, thereby facilitating maintenance; and by arranging, parallel to the second direction, the installation surface (211), which is generally formed to have a large area for installation of the electrical components (230), utilization of an interior space of a vehicle is improved, thereby realizing optimization of an assembly process.

Although preferred embodiments of the present disclosure have been described above by way of example, the scope of the present disclosure is not limited to such specific embodiments, and modifications that can be appropriately made within the scope set forth in the claims fall within the scope of protection of the present disclosure.

## Claims

1. An enclosure, comprising:
a housing (100) including a body (110) and a cover (120) coupled to each other to define a closed receiving space (130);
a fuse box (200) installed in the receiving space (130); and
an intermediate holder (300) simultaneously engaged with the fuse box (200) and the housing (100) to fix the fuse box (200),
wherein the intermediate holder (300) includes a first fastening portion (311) engaged with the fuse box (200) in a first direction and a second fastening portion (321) engaged with the housing (100) in a second direction, and fixes the fuse box (200) within the receiving space (130) in the second direction.

2. The enclosure of claim 1,
wherein the fuse box (200) has an installation surface (211) on which an electrical component (230) is installed in the first direction and which is arranged in the second direction, and an assembly surface (212) arranged in the first direction along a perimeter of the installation surface (211), the assembly surface (212) having a first coupling portion (220) formed on the assembly surface (212) in the first direction;
wherein the housing (100) has a second coupling portion (140) extending in the second direction from an inner surface of one of the body (110) and the cover (120); and
wherein the intermediate holder (300) has, on an inner side of the intermediate holder (300), the first fastening portion (311) extending in the first direction and engaged with the first coupling portion (220), and has, on an outer side of the intermediate holder (300), the second fastening portion (321) extending in the second direction and engaged with the second coupling portion (140), and is engaged with the housing (100) in the second direction while being engaged with the fuse box (200) in the first direction.

3. The enclosure of claim 2, wherein the intermediate holder (300) includes a first intermediate portion (310) arranged in the first direction and having the first fastening portion (311) on an inner side of the first intermediate portion (310), and a second intermediate portion (320) extending from the first intermediate portion (310) in a third direction and having the second fastening portion (321) on an outer side of the second intermediate portion (320), such that the intermediate holder (300) is engaged with the fuse box (200) and the housing (100) at different positions and in different directions.

4. The enclosure of claim 2,
wherein the first coupling portion (220) and the first fastening portion (311) have complementary structures that, when engaged with each other, define a first guide-fixing portion configured to guide coupling in the first direction while providing a fixing force in a third direction, and a first elastic fixing portion configured to elastically deform in the third direction while providing a fixing force in the first direction; and
wherein the second coupling portion (140) and the second fastening portion (321) have complementary structures that, when engaged with each other, define a second elastic fixing portion configured to elastically deform in the first direction while providing a fixing force in the second direction, and guide ribs (322) configured to receive opposite sides of the second elastic fixing portion.

5. The enclosure of claim 2, wherein a plurality of intermediate holders (300) are provided to engage the fuse box (200) with the housing (100) at positions on both sides in a third direction.

6. The enclosure of claim 1, further comprising:
a grommet (400) installed through one side of the body (110); and
a moisture ingress prevention seal (500) disposed between the body (110) and the cover (120) and between the grommet (400) and the cover (120) to prevent moisture from entering the receiving space (130).

7. The enclosure of claim 6, wherein the moisture ingress prevention seal (500) includes a seal body (510) received in an installation groove (123) formed along a perimeter of the cover (120), and a sealing lip portion (520) protruding from the seal body (510) in the second direction and configured to be in close contact with the body (110) and the grommet (400) while lengthening a moisture ingress path.

8. The enclosure of claim 7, wherein the moisture ingress prevention seal (500) further includes a close-contact protrusion (530) further protruding from the sealing lip portion (520) at a position corresponding to a boundary between the body (110) and the grommet (400).
